# EUROPEAN PATENT SPECIFICATION

(11) **EP 2 520 061 B1**
(45) Date of publication and mention of the grant of the patent: **02.10.2013**
(21) Application number: 10795125.3
(22) Date of filing: 06.12.2010
(51) Int. Cl.: H04W 4/00, H04W 12/06, H04L 29/06, H04L 29/08, H04L 12/24, G06F 21/33, H04W 8/24

(54) **METHODS TO ENABLE SECURE SELF-PROVISIONING OF SUBSCRIBER UNITS IN A COMMUNICATION SYSTEM**
VERFAHREN FÜR SICHERE SELBSTVERSORGUNG VON TEILNEHMEREINHEITEN IN EINEM KOMMUNIKATIONSSYSTEM
PROCÉDÉ D'AUTO-APPROVISIONNEMENT SÉCURISÉ D'UNITÉS D'ABONNÉS DANS UN SYSTÈME DE COMMUNICATION

(30) Priority: 28.12.2009 US 647858
(43) Date of publication of application: 07.11.2012
(73) Proprietor: Motorola Solutions, Inc., Schaumburg, IL 60196 (US)
(72) Inventor: HIMAWAN, Erwin,, Chicago Illinois 60659 (US); METKE, Anthony R.,, Naperville Illinois 60563 (US)
(74) Representative: Treleven, Colin
(86) International application number: PCT/US2010/059060
(87) International publication number: WO 2011/081784

(56) References cited:
- WO-A1-2004/040881
- US-A1- 2002 049 654
- US-A1- 2004 255 037
- US-A1- 2006 039 564
- US-A1- 2008 022 104
- US-A1- 2008 212 503
- US-A1- 2009 031 123
- US-A1- 2009 138 947
- US-A1- 2009 144 399
- US-B1- 7 386 721

## Description

### TECHNICAL FIELD

The technical field relates generally to communication systems, and in particular, it relates to a method of secure self-provisioning of subscriber units.

### BACKGROUND

Initial provisioning of a subscriber unit, such as a mobile or portable radio or other communication device, involves complex, manual processes in order to enable a new subscriber unit to operate on a communication system. Typically, a new subscriber unit is a blank slate. In order for the new subscriber unit to function with a particular communication system and network, the subscriber unit is customized or programmed with passwords, identifications, software applications, cryptography keying materials, and the like by the communication system owner. In order to perform the customization or programming, a technician must physically connect the subscriber unit to various provisioning devices (e.g. Customer Programming Software (CPS), Key Variable Loader (KVL)). In turn, the communication system populates its subscriber database with the subscriber unit's identification, authorized features, and keying materials, for example, button and control functions, frequency assignments, subscriber unit identification, and fleet assignments.

During the provisioning, the technician manually records and reconciles each subscriber unit's electronic serial number (ESN) and subscriber unit identification such that the technician does not accidently create one or more clones of subscriber units. The process of provisioning thousands of subscriber units by manually configuring each subscriber unit with the appropriate configuration parameters is prone to human error, slow, and a potential security breach for which theft of subscriber unit identity is possible. Likewise, the process to provision those thousands of subscriber unit into the communication system subscriber database is also slow and prone to human error. As a result, most communication systems open its communication system database during an initial provisioning period to allow subscriber units to be registered as soon as the subscriber unit attempts to use communication system resources for the first time. The communication system automatically creates a record for that subscriber unit in the communication system database at that time. This offers fast provisioning; however, it too, is subject to security breaches which assumes that most of the subscriber units will be registered during this open database period and that most of the subscriber units and/or radio users affiliated with the subscriber units which register into the communication system are legitimate subscriber units and radio users. Moreover, in the event that a subscriber unit is compromised or the programming parameter is erased, the subscriber unit needs to be physically reprogrammed. Recalling subscriber units from the field for programming is expensive, time consuming, and inefficient.

Thus, a method for secured and remote self-provisioning of a subscriber unit is needed. US2009/0144399 (Schneider) describes a method and system for re-setting time on a network appliance. The network appliance generates a request for an identity certificate, and receives the certificate from a network, before storing the certificate. See para [0021] of US'399. Later, a back-end server of the network may require the network appliance to provide the identity certificate, before the network establishes a secure link to the network appliance. If the network appliance's timing circuitry is too far behind, the back-end server will refuse to authenticate the network appliance. In this case, a time re-setting module of the network appliance can update the timing of the network appliance to a preliminary time value, based on time data in the header of a message received from a server. See paras [0025] and [0026] of US'399. US-A1-2004/0255037, US-A1-2009/0138947, US-A1-2002/0049654 and US-B1-7386721 show other known arrangements.

### BRIEF DESCRIPTION OF THE FIGURES

The accompanying figures, where like reference numerals refer to identical or functionally similar elements throughout the separate views, together with the detailed description below, are incorporated in and form part of the specification and serve to further illustrate various embodiments of concepts that include the claimed invention, and to explain various principles and advantages of those embodiments.

FIG. 1 is a diagram of an illustrative communication system in accordance with the principles of the present disclosure.

FIG. 2 is a flow diagram of an embodiment of a bootstrapping phase of the present disclosure.

FIG. 3 is a flow diagram of an embodiment of an enrollment phase of the present disclosure.

FIG. 4 is a flow diagram of an embodiment of a configuration phase of the present disclosure.

FIG. 5 is a flow diagram of an embodiment of an activation phase of the present disclosure.

Skilled artisans will appreciate that elements in the figures are illustrated for simplicity and clarity and have not necessarily been drawn to scale. For example, the dimensions of some of the elements in the figures may be exaggerated relative to other elements to help improve understanding of various. In addition, the description and drawings do not necessarily require the order illustrated. It will be further appreciated that certain actions and/or steps may be described or depicted in a particular order of occurrence while those skilled in the art will understand that such specificity with respect to sequence is not actually required.

Apparatus and method components have been represented where appropriate by conventional symbols in the drawings, showing only those specific details that are pertinent to understanding the various embodiments so as not to obscure the disclosure with details that will be readily apparent to those of ordinary skill in the art having the benefit of the description herein. Thus, it will be appreciated that for simplicity and clarity of illustration, common and well-understood elements that are useful or necessary in a commercially feasible embodiment may not be depicted in order to facilitate a less obstructed view of these various embodiments.

### DETAILED DESCRIPTION OF THE DISCLOSURE

Generally speaking, pursuant to the various embodiments, methods to enable remote, secure, self-provisioning of a subscriber unit are disclosed herein. The subscriber unit receives provisioning access data from a field provisioning interface and/or a security provisioning server and generates subscriber unit configuration trigger data from the provisioning access data. The subscriber unit then generates a certificate signing request. A certificate signing request is a message from the subscriber unit to a trusted third party, such as a public key infrastructure (PKI) service provider, to apply for a digital subscriber unit certificate, also known as an identity certificate. The subscriber unit certificate can be used by a party to cryptographically verify the identity of the subscriber unit.

The certificate signing request, including the subscriber unit configuration trigger data, is forwarded to a security provisioning server. The security provisioning server generates provisioning data for the subscriber unit using the subscriber unit configuration trigger data. The security provisioning server further, in response to the certificate signing request, provides to the subscriber unit the provisioning data and a subscriber unit certificate having authorization attributes associated with the provisioning data, to enable self-provisioning of the subscriber unit.

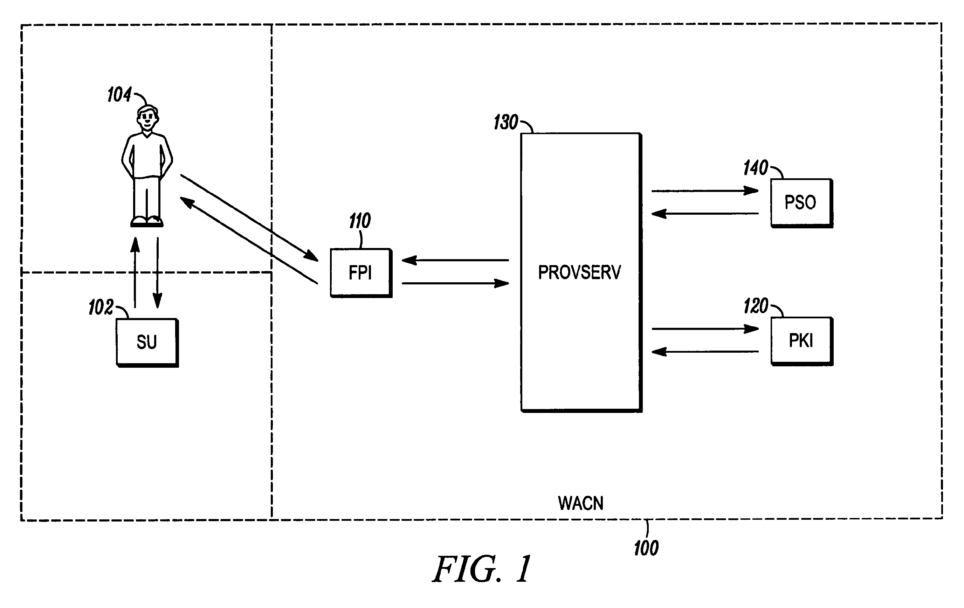

Turning now to the figures, and in particular to FIG. 1, an example of a communication system 100 in accordance with the present disclosure is shown. The communication system 100 includes a provisioning server 130 having as a user a Provisioning Security Officer (PSO) 140 and a "customer" public key infrastructure (PKI) service provider 120 that includes one or more PKI servers (not shown). A "service provider" refers to a person or entity that provides communications services, such as storage, trust hierarchies, and/or communications access to other persons or entities. A human subscriber unit user or radio user, hereafter "radio user" 104, is shown with a subscriber unit 102, which is a new or unprogrammed or unprovisioned subscriber unit that is functionally unable and is further unauthorized to operate on the communication system 100, prior to the implementing of the teachings herein.

The subscriber unit 102 interfaces with a field provisioning interface (FPI) 110 in order to first remotely obtain "provisioning access data" from the provisioning server 130 and then to, ultimately, remotely obtain "provisioning data" from the provisioning server 130, to operate on the communication system 100. As used herein, the "provisioning access data" means preliminary data that when downloaded to a subscriber unit provides the subscriber unit with configuration parameters needed for limited access to the communication system through a provisioning portal (e.g., a the provisioning server) to obtain the remaining data needed for the subscriber unit to complete the provisioning process in order to fully operate on the system. Examples of the provisioning access data include identified radio frequency (RF) channels for accessing the provisioning portal, capabilities or features of the subscriber unit, network (e.g., Internet Protocols (IP)) addresses for the provisioning server, etc. As used herein, the "provisioning data" comprises the remaining data that the subscriber unit obtains via the provisioning portal, which provides the full suite of configuration parameters needed by the subscriber unit to enroll in and operate on the communication system. Provisioning data includes, for example, network (e.g., IP) addresses, radio frequency channels, locations of authorized services, and other network related parameters, such as time slots data, priority data and network access rules, etc. Furthermore, "remotely" refers to a subscriber unit 102 that is not physically connected or adjacent to the provisioning server 130; and such remote communications can occur over a wired or wireless communications network as corresponds to the particular system implementation.

As indicated earlier, the subscriber unit 102 is new or otherwise not provisioned or configured to operate on the communication system, and does not at this point have its own certificate issued by the customer PKI 120. However, the subscriber unit is provisioned during manufacturing with a copy of a certificate of a trust anchor operated by the manufacturer of the subscriber unit. As will be described later, this certificate allows the subscriber unit and the provisioning server to create a chain of trust back to this common trust anchor (the trust anchor operated by the SU manufacture) to authenticate the parties and the provisioning data provided to the SU. The subscriber unit 102 is also referred to in the art as a communication device, a client entity, an access device, an access terminal, user equipment, a mobile station, a mobile subscriber unit, a mobile device, and the like, and can be any standard communication device such as a radio, a mobile phone, a two-way radio, a cell phone, and any other device capable of communications in a wireless environment. In an embodiment, the FPI 110 and the subscriber unit 102 share a common hardware unit, i.e., they are house on the same physical device, wherein, for instance, the FPI is embodied as a programming interface on the subscriber unit. In an alternative embodiment, the FPI is implemented using a separate hardware platform such as a web-enabled interface operating on a computer terminal connected to the subscriber unit.

The provisioning server 130 and the PKI service provider 120 with its corresponding PKI server (which comprises at least a certificate authority for servicing certificate signing requests and issuing certificates in response thereto) are illustrated as separate entities in FIG. 1. Further, the embodiments of the disclosure are described below by reference to two separate entities. However, in another embodiment, at least some functionality of the provisioning server and the PKI server are combined into a single entity on a common software and/or hardware platform and referred to herein as a security provisioning server, which term is used interchangeably with the term provisioning server.

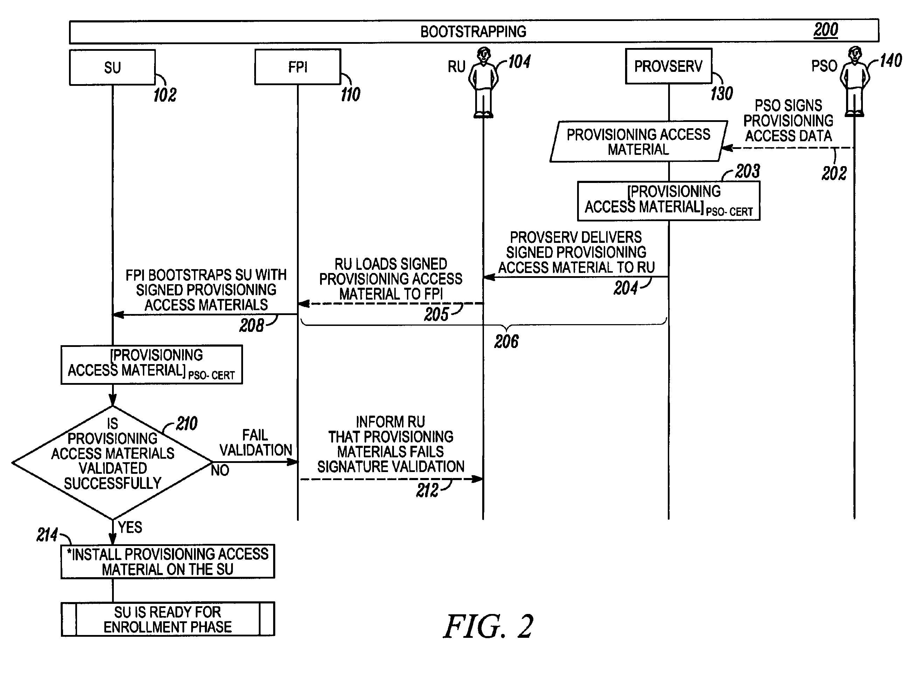

In general, the subscriber unit 102 and servers (e.g., provisioning server 130 and PKI server, whether separately or combined) are each implemented using (although not shown) a memory, one or more network interfaces, and a processing device that are operatively coupled, and which when programmed form the means for these devices to implement their desired functionality, for example as illustrated by reference to signaling and flow diagrams 200 to 500 shown in figures 2 through 5. The network interfaces are used for passing signaling (e.g., messages, packets, datagrams, frames, superframes, and the like) between these devices.

The implementation of the network interface in any particular device depends on the particular type of network, i.e., wired and/or wireless, to which the device is connected. For example, where the network supports wired communications, the interfaces may comprise a serial port interface (e.g., compliant to the RS-232 standard), a parallel port interface, an Ethernet interface, a USB interface, and/or a FireWire interface, and the like. Where the network supports wireless communications, the interfaces comprise elements including processing, modulating, and transceiver elements that are operable in accordance with any one or more standard or proprietary wireless interfaces, wherein some of the functionality of the processing, modulating, and transceiver elements may be performed by means of the processing device through programmed logic such as software applications or firmware stored on the memory device of a particular device or through hardware.

The processing device utilized by the subscriber unit 102 and the servers in the system 100 can be programmed with software or firmware logic or code for performing signaling such as that included in the signaling diagrams illustrated in figures 2 to 5; and/or the processing device may be implemented in hardware, for example, as a state machine or ASIC (application specific integrated circuit). The memory implemented by these devices can include short-term and/or long-term storage of various information needed for the functioning of the respective devices. The memory may further store software or firmware for programming the processing device with the logic or code needed to perform its functionality.

Enabling the radio user 104 to program the subscriber unit 102 remotely with provisioning data and keying material of communication system 100 involves four preliminary phases. The preliminary phases serve to verify and authenticate the identity of the new subscriber unit 102 prior to the subscriber unit 102 being able to download communication system 100 provisioning data, thus, preventing or limiting the provisioning data from being used or downloaded without authorization. The four phases include: bootstrapping, enrollment, configuration, and activation of the subscriber unit.

During the bootstrapping phase 200, as shown in FIG 2, the radio user 104 is provided with the provisioning access data or materials (used interchangeably herein) via the FPI 110, which is the initial set of data that enable the subscriber unit to have limited initial access to the provisioning access portal of communication system 100, e.g., managed at the provisioning server 130. The provisioning access data includes, but is not limited to, network addresses for the provisioning server 130, at least one radio frequency channel to access the network for sending a certificate signing request (CSR) (explained in more detail below), a set of certificates that chain or lead back to the trust anchor operated by the manufacturer of the subscriber unit (which is the common trust anchor for the provisioning server 130), capabilities or features for the subscriber unit (termed herein a "flashcode"), etc.

Illustratively, the FPI 110 is executed by the RU 104 at an unsecured computing platform such that the new subscriber unit 102 may initiate provisioning with the communication system 100. In an embodiment, the FPI 110 is a device or application to program the radio. Moreover, the platform where the FPI is running has an interface for a common access card (CAC); and the subscriber unit has a secured interface to the field provisioning interface FPI.

The communication system (100) owner via the customer PKI 120 provides each authorized radio user (104) with a signed certificate verifying a public key of the RU and the corresponding RU's authorization. The RU's private signing key (corresponding to the public key) and the certificate for securing such authorization can be stored in a common access card.

The provisioning access data is protected by the provisioning security (or provisioning server) officer (PSO) 140. The PSO is a person who is responsible for creating provisioning access data for the SU. A PSO certificate is also issued by the customer PKI. The PSO 140 authorizes or signs the provisioning access data 202 using the provisioning server's (130) digital signature or certificate.

In the present disclosure, the provisioning access materials or data enable the subscriber unit (102) to access provisioning resources only. The provisioning access material or data includes the flashcode e.g., identifying capabilities/features of the subscriber unit (102), and the necessary certificate chains which are used by the subscriber unit (102) to create a trust path between the provisioning security officer (140) certificate and the trust anchor certificate installed in subscriber unit (102) by the SU manufacturer. A certificate, such as a public key infrastructure (PKI) certificate (also known as a digital certificate or identity certificate) is an electronic document that uses a digital signature to bind together a public key with an identifier of an entity. The certificate can be used to verify that a public key belongs to the entity. In a typical public key infrastructure (PKI) scheme, the signature will be of a certificate authority (CA).

The signature is either a self-signed certificate or endorsements of the user. In either case, the signatures on a certificate are attestations by the certificate signer that the identity information and the public key belong together. The public key certification scheme relies on a predetermined assumption of the existence of a certificate authority or trusted third party.

The subscriber unit (102) has two sources of trusts ("trust anchor"): the trust anchor from the common or manufacturer PKI ("common trust anchor") which is controlled and managed by the manufacturer or factory to manage keys to protect manufacturer or factory assets, and a source of trust from the communication system PKI ("communication system trust anchor"), which is controlled and managed by the communication system to manage keys to protect the communication system assets.

At least one of the two sources of trust, typically the common trust anchor, is permanently provisioned during subscriber unit manufacturing. In addition, the subscriber unit is also provisioned with another, programmable trust anchor, which by default is initially the common trust anchor again, but which can be reprogrammed for example by way of the provisioning process in accordance with the teachings herein. Therefore, in order for the subscriber unit 102 to validate certificates issued by the communication system PKI, the subscriber unit needs a chain of certificates which bridge the common trust anchor and the communication system PKI trust anchor.

Accordingly, in the present disclosure, during the bootstrapping phase 200, the creation of the chain of certificates begins by a provisioning security officer (140) using the provisioning server (130) and signing provisioning access materials/data (203), 202. The signed provisioning access data includes the chain of certificates.

The provisioning access data (203) is forwarded to the field provisioning interface (110). In one embodiment the provisioning access materials are forwarded to the radio user (104) at 204, which loads the provisioning access data to the field provisioning interface (110), 205. In another embodiment, the provisioning access data (203) is forwarded from the provisioning server (130) directly to the field provisioning interface (110), 206. In another embodiment, the system owner may provide the provisioning access material to an authorized field security officer (FSO) for which the FSO bootstraps multiple subscriber units and assigns a user group to each subscriber unit.

A provisioning server is a server that retrieves radio user/subscriber unit credentials, and subscriber unit-specific enrollment parameters from a submitted signed certificate signing request, coordinates various radio user/subscriber unit and subscriber unit provisioning material, delivers the provisioning materials to the subscriber unit, and provisions radio user/subscriber unit services at the corresponding service provider(s).

The field provisioning interface (110) transfers the signed provisioning access materials, 208, to the subscriber unit (102). The subscriber unit (102) determines if the provisioning access materials (203) have been validated successfully, 210, or in other words authenticates a source of the provisioning access data.

To determine authenticity of the provisioning access data, the subscriber unit may verify the electronic signature of the provisioning access data by verifying it against a chain of certificates back to the common trust anchor. If the source of the provisioning access data has not been validated or authenticated, the radio user (104) is informed of the validation failure, 212. If the validation has been successful, the provisioning access data (203) is installed on the subscriber unit, 214. Thus, the subscriber unit (102) has remotely received authenticated provisioning access data.

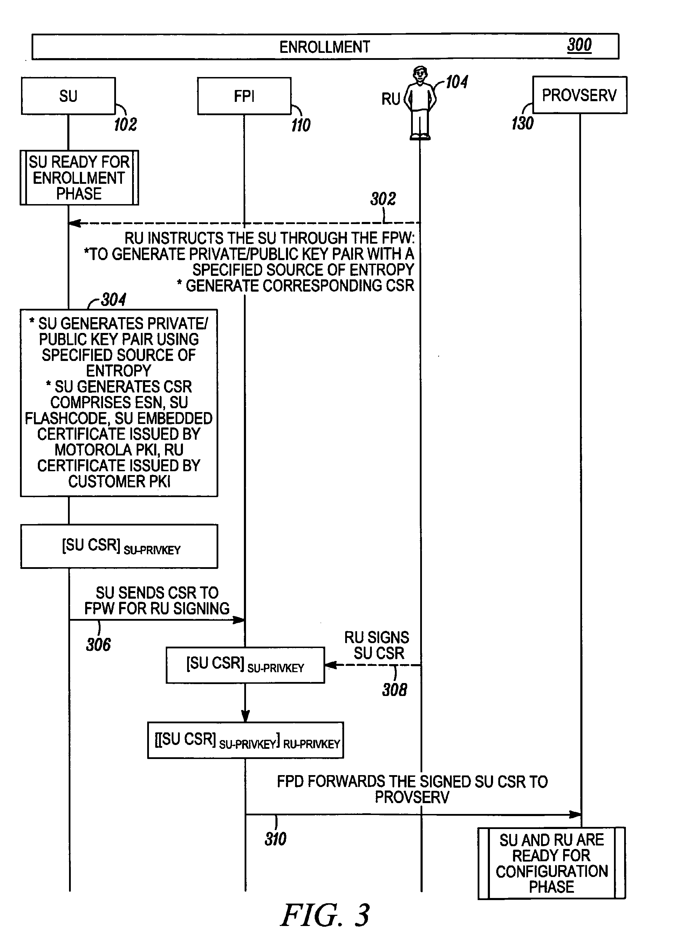

Once the subscriber unit (102) has been bootstrapped with the provisioning access materials, the subscriber unit (102) is ready for the enrollment phase, 300 (FIG. 3). In this phase, in one embodiment, the radio user (104) sponsors his subscriber unit (102) to enroll in the communication system (100). For example, the radio user (104) instructs the subscriber unit (102), through the field provisioning interface (110), to generate private/public key pairings using the entropy sources of the subscriber unit (102) or the radio user (104), 302. The SU 102 further generates a certificate signing request that the SU signs using the private key prior to forwarding the certificate signing request to the provisioning server.

The certificate signing request generated by the subscriber unit is different from standard certificate signing requests in that it contains "subscriber unit configuration trigger data", which as that term is used herein means data that the provisioning server uses to initiate the generation of the provisioning data for the SU, which will allow the SU access to all features and services authorized by the owner of the communication system. The subscriber unit configuration trigger, in an embodiment, is determined/generated by the SU and comprises at least some of the provisioning access data, namely, the flashcode, which provides an indication of the SU capabilities and/or features, and may also comprise other data such as an identifier for the subscriber unit (e.g., the ESN). The certificate signing request further includes the subscriber unit embedded certificate issued by common trust anchor, and the certificate/signature of the radio user that is sponsoring the subscriber unit 102. The radio user and/or subscriber unit certificate is used to authenticate the subscriber unit generated public key. The subscriber unit embedded certificate issued by the common trust anchor contains information to identify the subscriber unit 102, for example, subscriber unit ESN, model type or number, firmware version, and the like.

The subscriber unit (102) forwards the certificate signing request to the field provisioning interface (110), 306. The radio user (104) uses the field provisioning interface (110) to sign the certificate signing request, 308. The field provisioning interface (110) then forwards the signed certificate signing request to the provisioning server (130), 310, using the provisioning resources specified during the bootstrapping phase, more particularly, the provisioning access channel (e.g., RF channel) identified in the provisioning access data.

In another embodiment, a field security officer, rather than the radio user, sponsors the subscriber unit. The field security officer indicates within the certificate signing request that it is an FSO-sponsored certificate signing request, and specifies the subscriber unit user group. In either embodiment, the subscriber unit, having forwarded the signed certificate signing request with the subscriber unit configuration trigger data, is ready for the configuration phase.

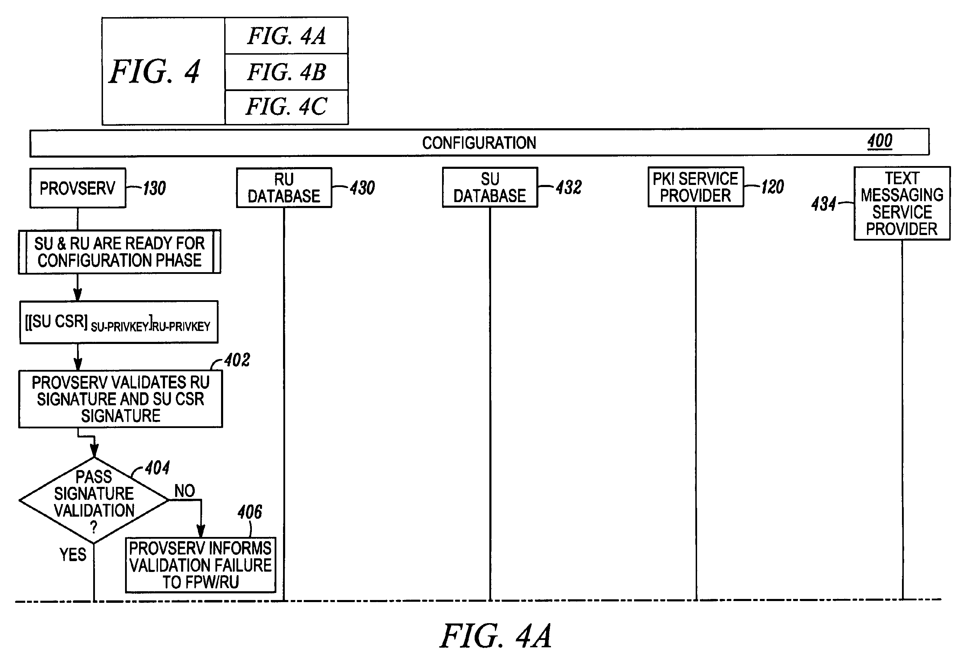

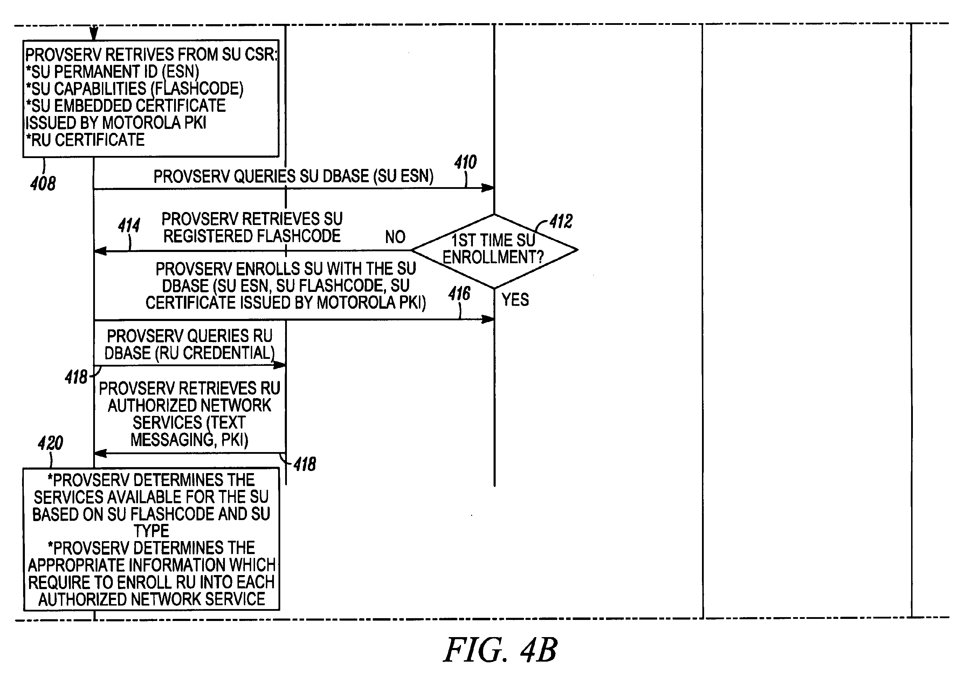

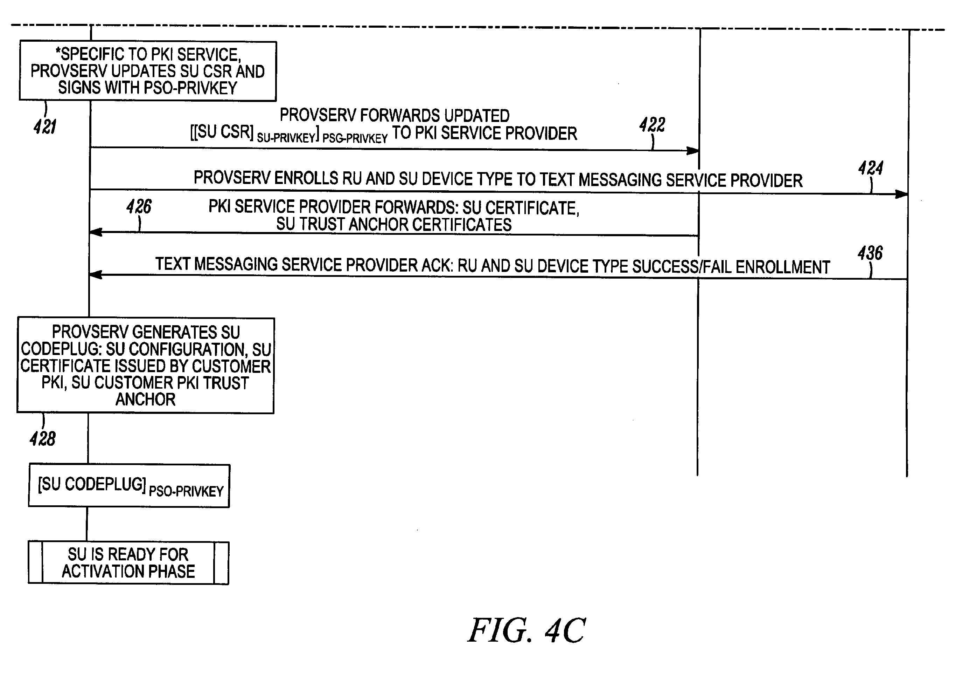

During configuration phase 400, as shown in FIG. 4, the radio user and the subscriber unit 102 are configured with the appropriate communication system services, according the radio user's assigned privileges/authorization and the subscriber unit's 102 capabilities (features/options, and the like), hereafter referred to as the subscriber unit's flashcode. As mentioned earlier, the subscriber unit configuration trigger data includes the flashcode and an identifier for the subscriber unit (102). An identifier can be an Electronic Serial Number (ESN), which is a string of numbers that permanently and uniquely identify a radio globally.

Upon receiving the subscriber unit's CSR from the field provisioning interface, the provisioning server authenticates the radio user and subscriber unit signatures on the CSR to ensure that the CSR is signed by a radio user and/or subscriber unit that is a legitimate communication system member. The provisioning server (130) receives the signed certificate signing request from the field provisioning interface and validates the radio user signature and the subscriber unit certificate signing request signature (private key), 402, 404, by retrieving subscriber unit-specific enrollment parameters (for example, subscriber unit ESN, subscriber unit flashcode, subscriber unit type, subscriber unit model number, subscriber unit firmware version, and subscriber unit embedded certificate issued by the common or factory PKI) and radio user/subscriber unit credentials. The provisioning server performs database lookup on the subscriber unit databases using the subscriber unit-specific enrollment parameters to verify whether the subscriber unit has been previously enrolled or is the subscriber unit's first-time enrollment. The provisioning server also validates the subscriber unit flashcode to ensure that the subscriber unit has a legitimate flashcode.

If the signatures fail validation, the provisioning server concludes that the subscriber unit has been compromised, and informs the radio user and/or the field provisioning interface, 406.

If the signatures pass validation, the provisioning server retrieves from the subscriber unit CSR the subscriber unit identifier, the subscriber unit flashcode, the common trust anchor, and the radio user certificate, 408. Using the subscriber unit identifier, the provisioning server searches a subscriber unit database and determines if the subscriber unit has previously been provisioned on the communication system, 410,412.

If the subscriber unit has been previously registered, the provisioning server retrieves the previously registered flashcode for the subscriber unit, 414 and performs data comparison to ensure that the subscriber unit information contained in the communication system subscriber unit database is in synch with the information submitted by the subscriber unit, wherein the synchronized or verified flashcode data regarding the SU's capabilities makes up a part of the provisioning data for the SU.

If the subscriber unit has not previously been registered on the communication system, the provisioning server enrolls the subscriber unit with the subscriber unit database (enrolls the subscriber's ESN, flashcode, and common trust anchor certificate into the database), 416, wherein the registered flashcode data regarding the SU's capabilities makes up a part of the provisioning data for the SU.

Using the radio user/subscriber unit credentials retrieved from the radio user/subscriber unit certificate or CSR, the provisioning server performs database lookup on the radio user/subscriber unit databases 430, 432 to retrieve radio user/subscriber unit privileges set. The provisioning server maps the radio user/subscriber unit privileges to a specific set of authorized services with which the provisioning server determines the appropriate network service provider and the corresponding information that will be used to enroll the radio user/subscriber unit into these services. In order to ensure subscriber unit compatibility with services offered by the network, the subscriber unit capabilities (enabled features/options) needs to be registered with the appropriate service providers.

Using the retrieved flashcode contained in the CSR, the provisioning server determines subscriber unit supported network services, and determines in which authorized network services to enroll the radio user, 420. The provisioning server then registers the subscriber unit with each service provider, 420. In addition, the provisioning server updates the subscriber unit certificate signing request with an indication of the SU's authorized services or authorization attributes associated with the provisioning data and signs with the provisioning security officer's private key, 421.

In the embodiment where the FSO sponsors the subscriber unit, the provisioning server queries a user group database to retrieve group privileges. The provisioning server maps the group privileges to a specific set of authorized services with which the provisioning server determines the appropriate network service provider and the corresponding information that will be used to enroll the group into these services.

The provisioning server forwards the updated/modified certificate signing request to the PKI service provider (120), 422, and enrolls the radio user/subscriber unit and the subscriber unit to service providers, such as the text messaging service provider (434), at 424.

In response to the updated certificate signing request that has been forwarded, the PKI service provider (120) forwards to the provisioning server (130) the subscriber unit's signed certificate having the authorization attributes associated with the provisioning data (which provides an indication of the SU's authorization to use certain service providers) as well as the trust anchors for the subscriber unit (e.g., the communication system trust anchor and common trust anchor), at 426. The provisioning server (130) is then able to generate the subscriber unit's codeplug (i.e., the subscriber unit's signed certificate, the subscriber unit's chain of trust anchors, and the subscriber unit's provisioning data).

Specific to the subscriber unit PKI service provider, the provisioning server maps the subscriber unit supported service provider configuration parameters into the appropriate subscriber unit certificate authorization attributes, extensions, and constraints for which the provisioning server updates the subscriber unit's CSR, and forwards the updated enrollment request to the issuing certificate authority.

For example, by default, the subscriber unit is enabled to have radio access and text messaging services. During initial subscriber unit configuration phase, the provisioning server retrieves radio user/subscriber unit-authorized services (in this example: radio access and text messaging) and registers the radio user/subscriber unit to the radio access and text messaging service providers, at 424, and receives an acknowledgement of such registration, at 436. Independently, the provisioning server retrieves subscriber unit features/options (data capable) and registers the subscriber unit to each one of the service providers.

In response to the provisioning server configuration procedure, each service provider responds with subscriber unit network service provisioning material for which the provisioning server maps these network service provisioning materials into a corresponding subscriber unit specific provisioning downloadable object according to the model and manufacturer of the subscriber units, 428. For example, the subscriber unit specific provisioning downloadable object for PKI service includes subscriber unit certificate, subscriber unit customer trust space source-of-trust (communication system trust anchor) certificates, for radio access service may include subscriber unit button/control functions, subscriber unit fleet map, and subscriber unit frequency/channel. The provisioning server combines each provisioning object into subscriber unit codeplug, which is then encrypted by the subscriber unit certificate and signed by the PSO certificate. With its codeplug available, the subscriber unit (102) is prepared for activation onto the communication system (100).

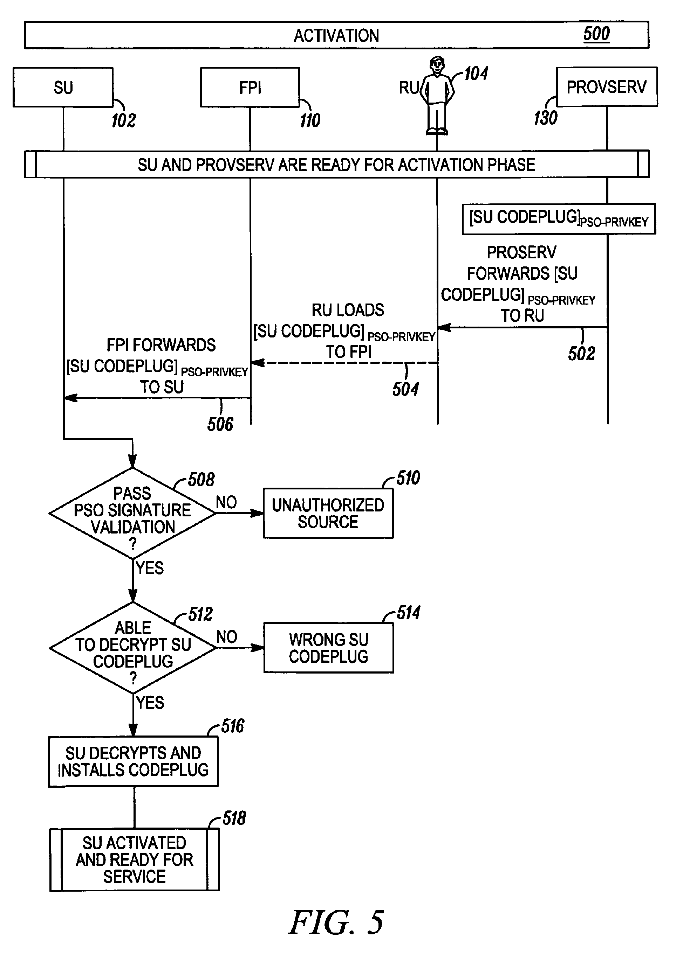

The activation phase 500, shown in FIG. 5, begins when the provisioning server has successfully created the subscriber unit specific codeplug object and is ready to deliver the subscriber unit codeplug object to the subscriber unit. The provisioning server (130) delivers to the subscriber unit (102) specific provisioning codeplugs to the subscriber unit (102) via the radio user (104) 502, and the field provisioning interface (110), 504.

The field provisioning interface (110) forwards the codeplug to the subscriber unit (102), 506. When the subscriber unit 102 receives the signed codeplug, the subscriber unit (102) validates the PSO (140) digital signature against the common trust anchor certificate, 508. When the subscriber unit (102) successfully validates the PSO (140) digital signature, the subscriber unit decrypts the signed object with its private key, 512. The subscriber unit (102) then installs the codeplug, 516. With regard to the trust anchor/PKI service, the subscriber unit changes the programmable subscriber unit trust anchor from the default common trust anchor to the communication system trust anchor. The subscriber unit is ready to use the services provided by the communication system/network.

In all of the above phases, wireless or wired communication link can be employed between the provisioning server and the field provisioning interface. One illustrative transport mechanism is to perform online, real-time transaction using SSL/TLS. A second illustrative transport mechanism is to perform online, non-real-time transaction; .e.g. email. When there is no on-line communication link between these devices, the device may store the information in a removable storage which can be transported via an off-line transport mechanism.

The advantages of the present disclosure will be appreciated by those skilled in the art. A new subscriber unit can be securely provisioned remotely, without having to be in physical contact with or adjacent to the provisioning server and can maintain efficient and cost-effective key management.

In the foregoing specification, specific embodiments have been described. However, one of ordinary skill in the art will appreciate that various modifications and changes can be made without departing from the scope of the invention as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art. A device or structure that is "configured" in a certain way is configured in at least that way, but may also be configured in ways that are not listed. Also, the sequence of steps in a flow diagram or elements in the claims, even when preceded by a letter does not imply or require that sequence.

It will be appreciated that some embodiments may be comprised of one or more generic or specialized processors (or "processing device") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and apparatus for indicating status of channels assigned to a talkgroup described herein. The non-processor circuits may include, but are not limited to, a subscriber unit receiver, a subscriber unit transmitter, signal drivers, clock circuits, power source circuits, and user input devices. As such, these functions may be interpreted as steps of a method to perform the indicating of status of channels assigned to a talkgroup described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Both the state machine and ASIC are considered herein as a "processing device" for purposes of the foregoing discussion and claim language.

Moreover, an embodiment can be implemented as a computer-readable storage element or medium having computer readable code stored thereon for programming a computer (e.g., comprising a processing device) to perform a method as described and claimed herein. Examples of such computer-readable storage elements include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method to enable secure self-provisioning of a subscriber unit (102) into a communication system, the method comprising:
at the security provisioning server (130):
receiving (310), from a subscriber unit (102), that has been previously provided (208) provisioning access data, a certificate signing request comprising subscriber unit (102) configuration trigger data;
generating (408) provisioning data for the subscriber unit (102) using the subscriber unit (102) configuration trigger data; and
in response to the certificate signing request, providing (502) to the subscriber unit (102) the provisioning data and a subscriber unit (102) certificate having authorization attributes associated with the provisioning data, to enable self-provisioning of the subscriber unit (102).

2. The method of claim 1 further comprising:
modifying the certificate signing request with an indication of the authorization attributes and forwarding (422) the modified certificate signing request to a public key infrastructure (PKI) service provider;
receiving (426) from the public key infrastructure service provider a signed certificate for the subscriber unit (102) having the authorization attributes, which is provided to the subscriber unit (102).

3. The method of claim 1, wherein the subscriber unit (102) configuration trigger data comprises capabilities and an identifier for the subscriber unit (102).

4. The method of claim 3, wherein generating (408) the provisioning data using the subscriber unit (102) configuration trigger data comprises:
querying (410) a subscriber unit (102) database to determine, based on the subscriber unit (102) capabilities and identifier, whether the subscriber unit (102) is already enrolled in the subscriber unit (102) database;
when the subscriber unit (102) is not already enrolled in the subscriber unit (102) database, registering (416) the subscriber unit (102) capabilities and identifier, wherein the provisioning data comprises the registered subscriber unit (102) capabilities;
when the subscriber unit (102) is already enrolled in the subscriber unit (102) database, verifying the subscriber unit (102) capabilities and identifier, wherein the provisioning data comprises the verified subscriber unit (102) capabilities.

5. The method of claim 4 further comprising:
enrolling (424) the subscriber unit (102) with at least one service provider based on the provisioning data for the subscriber unit (102), wherein the authorization attributes contained in the subscriber unit (102) certificate include an indication of authorization to use the at least one service provider.

6. The method of claim 3, wherein the subscriber unit (102) capabilities are provided in the provisioning access data to the subscriber unit (102) from at least one of the security provisioning server (130) or a field provisioning interface (110), prior to the security provisioning server (130) receiving the certificate signing request.

7. The method of any previous claim, further comprising providing (428), to the subscriber unit (102), a trust anchor certificate corresponding to the subscriber unit (102) certificate.

8. The method of any previous claim, further comprising determining authorized privileges of a user (104) of the subscriber unit (102), and enrolling the user with at least one service provider (120) based on the authorized privileges of the user.

9. The method of any previous claim, further comprising authenticating the subscriber unit (102) by verifying an electronic signature applied by the subscriber unit (102) to the certificate signing request and verifying a copy of a certificate of a common trust anchor received from the subscriber unit (102) with the certificate signing request against a chain of certificates back to the common trust anchor.

10. The method of claim 9 further comprising authenticating a user of the subscriber unit (102) by verifying an electronic signature applied by the user to the certificate signing request and verifying a copy of a user certificate issued by a public key infrastructure (120) service provider against a chain of certificates back to a trust anchor of the public key infrastructure (120) service provider.

11. A method to enable secure self-provisioning of a subscriber unit (102) into a communication system, the method comprising:
at a subscriber unit (102):
receiving (218) provisioning access data;
generating (304) subscriber unit (102) configuration trigger data from a subset of the provisioning access data;
generating a certificate signing request that includes the subscriber unit (102) configuration trigger data and forwarding (306) the certificate signing request to a security provisioning server (130);
receiving (506), from the security provisioning server (130) in response to the certificate signing request, provisioning data and a subscriber unit (102) certificate having authorization attributes associated with the provisioning data; and
provisioning (516) the subscriber unit (102) with the provisioning data.

12. The method of claim 11, wherein the subset of the provisioning access data comprises capabilities of the subscriber unit (102).

13. The method of claim 11 or claim 12, wherein the certificate signing request is forwarded (306) over a provisioning access channel identified in the provisioning access data.

14. The method of any of claims 11-13, further comprising the subscriber unit (102) authenticating (508) a source of the provisioning access data.

15. The method of claim 14, wherein authenticating (508) the source of the provisioning access data comprises:
at the subscriber unit (102):
storing a copy of a certificate of a common trust anchor; and
verifying an electronic signature applied to the provisioning access data by the source of the provisioning access data and verifying a certificate of the source of the provisioning access data against a chain of certificates back to the common trust anchor.

## Patentansprüche

1. Verfahren, um ein sicheres Self-Provisioning einer Teilnehmereinheit (102) in ein Kommunikationssystem freizugeben, wobei das Verfahren umfasst:
bei dem Sicherheits-Provisioning-Server (130):
Empfangen (310), von einer Teilnehmereinheit (102), der zuvor Provisioning-Zugriffsdaten zur Verfügung gestellt worden sind (208), einer Zertifikatunterzeichnungsanforderung, die Teilnehmereinheit (102)-Konfigurationstriggerdaten umfasst;
Erzeugen (408) von Provisioning-Daten für die Teilnehmereinheit (102) unter Verwendung der Teilnehmereinheit (102)-Konfigurationstriggerdaten; und
in Reaktion auf die Zertifikatunterzeichnungsanforderung, Bereitstellen (502) an die Teilnehmereinheit (102) der Provisioning-Daten und eines Teilnehmereinheit (102)-Zertifikates, das über mit den Provisioning-Daten verknüpften Berechtigungsattribute verfügt, um ein Self-Provisioning der Teilnehmereinheit (102) freizugeben.

2. Verfahren gemäß Anspruch 1, das weiterhin umfasst:
Modifizieren der Zertifikatunterzeichnungsanforderung mit einer Anzeige der Berechtigungsattribute und Weiterleiten (422) der modifizierten Zertifikatunterzeichnungsanforderung an einen PKI-Dienstanbieter (PKI = Public-Key-I nfrastru ktu r);
Empfangen (426) von dem Public-Key-Infrastruktur-Dienstanbieter eines unterzeichneten Zertifikates für die Teilnehmereinheit (102), die über die Berechtigungsattribute verfügt, die der Teilnehmereinheit (102) zur Verfügung gestellt werden.

3. Verfahren gemäß Anspruch 1, wobei die Teilnehmereinheit (102)-Konfigurationstriggerdaten Fähigkeiten und einen Identifizierer für die Teilnehmereinheit (102) umfasst.

4. Verfahren gemäß Anspruch 3, wobei ein Erzeugen (408) der Provisioning-Daten unter Verwendung der Teilnehmereinheit (102)-Konfigurationstriggerdaten umfasst:
Abfragen (410) einer Teilnehmereinheit (102)-Datenbank, um, basierend auf den Teilnehmereinheit (102)-Fähigkeiten und dem Teilnehmereinheit-Identifizierer, zu bestimmen, ob die Teilnehmereinheit (102) bereits in der Teilnehmereinheit (102)-Datenbank eingeschrieben ist;
wenn die Teilnehmereinheit (102) noch nicht in der Teilnehmereinheit (102)-Datenbank eingeschrieben ist, Anmelden (416) der Teilnehmereinheit (102)-Fähigkeiten und des Teilnehmereinheit-Identifizierers, wobei die Provisioning-Daten die angemeldeten Teilnehmereinheit (102)-Fähigkeiten umfassen;
wenn die Teilnehmereinheit (102) bereits in der Teilnehmereinheit (102)-Datenbank eingeschrieben ist, Überprüfen der Teilnehmereinheit (102)-Fähigkeiten und des Teilnehmereinheit-Identifizierers, wobei die Provisioning-Daten die überprüften Teilnehmereinheit (102)-Fähigkeiten umfassen.

5. Verfahren gemäß Anspruch 4, das weiterhin umfasst:
Einschreiben (424) der Teilnehmereinheit (102) mit mindestens einem Dienstanbieter basierend auf den Provisioning-Daten für die Teilnehmereinheit (102), wobei die in dem Teilnehmereinheit (102)-Zertifikat enthaltenen Berechtigungsattribute eine Anzeige einer Berechtigung umfassen, den mindestens einen Dienstanbieter zu verwenden.

6. Verfahren gemäß Anspruch 3, wobei die Teilnehmereinheit (1 02)-Fähigkeiten in den Provisioning-Zugriffsdaten der Teilnehmereinheit (102) von dem Sicherheits-Provisioning-Server (130) und/oder einer Feld-Provisioning-Schnittstelle (110) zur Verfügung gestellt werden, bevor der Sicherheits-Provisioning-Server (130) eine Zertifikatunterzeichnungsanforderung empfängt.

7. Verfahren gemäß einem der vorangehenden Ansprüche, das weiterhin umfasst:
Bereitstellen (428) an die Teilnehmereinheit (102) eines Vertrauensanker-Zertifikates entsprechend dem Teilnehmereinheit (102)-Zertifikat.

8. Verfahren gemäß einem der vorangehenden Ansprüche, das weiterhin umfasst:
Bestimmen von autorisierten Privilegien eines Anwenders (104) der Teilnehmereinheit (102) und Einschreiben des Anwenders mit mindestens einem Dienstanbieter (120) basierend auf den autorisierten Privilegien des Anwenders.

9. Verfahren gemäß einem der vorangehenden Ansprüche, das weiterhin umfasst:
Authentifizieren der Teilnehmereinheit (102) durch Überprüfen einer elektronischen Unterschrift, die durch die Teilnehmereinheit (102) auf die Zertifikatunterzeichnungsanforderung eingesetzt wird, und Abgleichen einer Kopie eines Zertifikates eines gemeinsamen Vertrauensankers, der von der Teilnehmereinheit (102) mit der Zertifikatunterzeichnungsanforderung empfangen wird,
mit einer Reihe von Zertifikaten zurück zu dem gemeinsamen Vertrauensanker.

10. Verfahren gemäß Anspruch 9, das weiterhin umfasst: Authentifizieren eines Anwenders der Teilnehmereinheit (102) durch Überprüfen einer elektronischen Unterschrift, die durch den Anwender auf die Zertifikatunterzeichnungsanforderung hin eingesetzt wird, und Abgleichen einer Kopie eines Anwenderzertifikates, das durch einen Public-Key-Infrastruktur (120)-Dienstanbieter ausgegeben wird, mit einer Reihe von Zertifikaten zurück zu einem Vertrauensanker des Public-Key-Infrastruktur (120)-Dienstanbieters.

11. Verfahren, um ein sicheres Self-Provisioning einer Teilnehmereinheit (102) in ein Kommunikationssystem freizugeben, wobei das Verfahren umfasst:
bei einer Teilnehmereinheit (102):
Empfangen (218) von Provisioning-Zugriffsdaten;
Erzeugen (304) von Teilnehmereinheit (102)-Konfigurationstriggerdaten aus einer Teilmenge der Provisioning-Zugriffsdaten;
Erzeugen einer Zertifikatunterzeichnungsanforderung, die die Teilnehmereinheit (102)-Konfigurationstriggerdaten umfasst, und Weiterleiten (306) der Zertifikatunterzeichnungsanforderung zu einem Sicherheits-Provisioning-Server (130);
Empfangen (506), von dem Sicherheits-Provisioning-Server (130) in Reaktion auf die Zertifikatunterzeichnungsanforderung, von Provisioning-Daten und eines Teilnehmereinheit (102)-Zertifikates, das über mit den Provisioning-Daten verknüpften Autorisierungsattribute verfügt; und
Versorgen (516) der Teilnehmereinheit (102) mit den Provisioning-Daten.

12. Verfahren gemäß Anspruch 11, wobei die Teilmenge der Provisioning-Zugriffsdaten Fähigkeiten der Teilnehmereinheit (102) umfasst.

13. Verfahren gemäß Anspruch 11 oder Anspruch 12, wobei die Zertifikatunterzeichnungsanforderung über einen Provisioning-Zugriffskanal, der in den Provisioning-Zugriffsdaten identifiziert wird, weitergeleitet wird (306).

14. Verfahren gemäß einem der Ansprüche 11 - 13, das weiterhin umfasst: Authentifizieren (508) einer Quelle der Provisioning-Zugriffsdaten durch die Teilnehmereinheit (102).

15. Verfahren gemäß Anspruch 14, wobei ein Authentifizieren (508) der Quelle der Provisioning-Zugriffsdaten umfasst:
bei einer Teilnehmereinheit (102):
Speichern einer Kopie eines Zertifikates eines gemeinsamen Vertrauensankers; und
Überprüfen einer elektronischen Unterschrift, die durch die Quelle der Provisioning-Zugriffsdaten auf die Provisioning-Zugriffsdaten angewendet wird, und Abgleichen eines Zertifikates der Quelle der Provisioning-Zugriffsdaten mit einer Reihe von Zertifikaten zurück zu dem gemeinsamen Vertrauensanker.

## Revendications

1. Procédé permettant l'auto-approvisionnement sécurisé d'une unité d'abonné (102) dans un système de communication, le procédé comprenant :
au sein du serveur d'approvisionnement de sécurité (130) :
la réception (310), en provenance d'une unité d'abonné (102), ayant préalablement reçu (208) des données d'accès à l'approvisionnement, une demande de signature de certificat comprenant des données de déclenchement de configuration de l'unité d'abonné (102) ;
la génération (408) de données d'approvisionnement pour l'unité d'abonnées (102) à l'aide des données de déclenchement de configuration de l'unité d'abonné (102) ; et
en réponse à la demande de signature de certificat, fourniture (502) à l'unité d'abonné (102) des données d'approvisionnement et d'un certificat d'unité d'abonné (102) ayant des attributs d'autorisation associés aux données d'approvisionnement, pour permettre l'auto-approvisionnement de l'unité d'abonné (102).

2. Procédé selon la revendication 1, comprenant en outre :
la modification de la demande de signature de certificat avec une indication des attributs d'autorisation et le transfert (422) de la demande de signature de certificat modifiée à un fournisseur de services d'infrastructure de clés publiques (PKI) ;
la réception (426), en provenance du fournisseur de services d'infrastructure de clés publiques, d'un certificat signé pour l'unité d'abonné (102) ayant les attributs d'autorisation, qui est fourni à l'unité d'abonné (102).

3. Procédé selon la revendication 1, dans lequel les données de déclenchement de configuration de l'unité d'abonné (102) comprennent des capacités et un identifiant pour l'unité d'abonné (102).

4. Procédé selon la revendication 3, dans lequel la génération (408) des données d'approvisionnement à l'aide des données de déclenchement de configuration de l'unité d'abonné (102) comprend :
l'interrogation (410) d'une base de données d'unités d'abonné (102) pour déterminer, en fonction des capacités et de l'identifiant de l'unité d'abonné (102), si l'unité d'abonné (102) est déjà inscrite ou non dans la base de données d'unités d'abonné (102) ;
lorsque l'unité d'abonné (102) n'est pas encore inscrite dans la base de données d'unités d'abonné (102), l'enregistrement (416) des capacités et de l'identifiant de l'unité d'abonné (102), les données d'approvisionnement comprenant les capacités enregistrée de l'unité d'abonné (102) ;
lorsque l'unité d'abonné (102) est déjà inscrite dans la base de données d'unités d'abonné (102), la vérification des capacités et de l'identifiant de l'unité d'abonné (102), les données d'approvisionnement comprenant les capacités vérifiées de l'unité d'abonné (102).

5. Procédé selon la revendication 4, comprenant en outre :
l'inscription (424) de l'unité d'abonné (102) avec au moins un fournisseur de services en fonction des données d'approvisionnement pour l'unité d'abonné (102), les attributs d'autorisation contenus dans le certificat d'unité d'abonné (102) comportant une indication d'autorisation à utiliser l'au moins un fournisseur de services.

6. Procédé selon la revendication 3, dans lequel les capacités de l'unité d'abonné (102) sont fournies à l'unité d'abonné (102), dans les données d'accès à l'approvisionnement, par au moins l'un du serveur d'approvisionnement de sécurité (130) ou d'une interface d'approvisionnement hors siège (110), avant que le serveur d'approvisionnement de sécurité (130) reçoive la demande de signature de certificat.

7. Procédé selon l'une quelconque des revendications précédentes, comprenant en outre la fourniture (428), à l'unité d'abonné (102), d'un certificat d'ancre de confiance correspondant au certificat de l'unité d'abonné (102).

8. Procédé selon l'une quelconque des revendications précédentes, comprenant en outre la détermination de privilèges autorisés d'un utilisateur (104) de l'unité d'abonné (102), et l'inscription de l'utilisateur avec au moins un fournisseur de services (120) en fonction des privilèges autorisés de l'utilisateur.

9. Procédé selon l'une quelconque des revendications précédentes, comprenant en outre l'authentification de l'unité d'abonné (102) par vérification d'une signature électronique appliquée par l'unité d'abonné (102) à la demande de signature de certificat et la vérification d'une copie d'un certificat d'une ancre de confiance commune reçue de l'unité d'abonné (102) avec la demande de signature de certificat vis-à-vis d'une chaîne de certificats renvoyée à l'ancre de confiance commune.

10. Procédé selon la revendication 9, comprenant en outre l'authentification d'un utilisateur de l'unité d'abonné (102) par vérification d'une signature électronique appliquée par l'utilisateur à la demande de signature de certificat et la vérification d'une copie d'un certificat d'utilisateur émis par un fournisseur de services d'infrastructure de clés publiques (120) vis-à-vis d'une chaîne de certificats renvoyée à une ancre de confiance du fournisseur de services d'infrastructure de clés publiques (120).

11. Procédé permettant l'auto-approvisionnement sécurisé d'une unité d'abonné (102) dans un système de communication, le procédé comprenant :
au sein d'une unité d'abonné (102) :
la réception (218) de données d'accès à l'approvisionnement ;
la génération de données (304) de déclenchement de configuration de l'unité d'abonné (102) à partir d'un sous-ensemble des données d'accès à l'approvisionnement ;
la génération d'une demande de signature de certificat qui comporte les données de déclenchement de configuration de l'unité d'abonné (102) et le transfert (306) de la demande de signature de certificat à un serveur d'approvisionnement de sécurité (130) ;
la réception (506), en provenance du serveur d'approvisionnement de sécurité (130), en réponse à la demande de signature de certificat, de données d'approvisionnement et d'un certificat d'unité d'abonné (102) ayant des attributs d'autorisation associés aux données d'approvisionnement ; et
l'approvisionnement (516) de l'unité d'abonné (102) avec les données d'approvisionnement.

12. Procédé selon la revendication 11, dans lequel le sous-ensemble de données d'accès à l'approvisionnement comprend des capacités de l'unité d'abonné (102).

13. Procédé selon la revendication 11 ou la revendication 12, dans lequel la demande de signature de certificat est transférée (306) sur un canal d'accès à l'approvisionnement identifié dans les données d'accès à l'approvisionnement.

14. Procédé selon l'une quelconque des revendications 11 à 13, comprenant en outre le fait que l'unité d'abonné (102) authentifie (508) une source des données d'accès à l'approvisionnement.

15. Procédé selon la revendication 14, dans lequel l'authentification (508) de la source des données d'accès à l'approvisionnement comprend :
au sein de l'unité d'abonné (102) :
le stockage d'une copie d'un certificat d'une ancre de confiance commune ; et
la vérification d'une signature électronique appliquée aux données d'accès à l'approvisionnement par la source des données d'accès à l'approvisionnement et la vérification d'un certificat de la source des données d'accès à l'approvisionnement vis-à-vis d'une chaîne de certificats renvoyée à l'ancre de confiance commune.
